# EUROPEAN PATENT APPLICATION

(11) **EP 1 167 817 A2**
(43) Date of publication of application: **02.01.2002**
(21) Application number: 01114739.4
(22) Date of filing: 22.06.2001
(51) Int. Cl.: F16H 1/46

(54) **Planet gear reducer**

(30) Priority: 27.06.2000 IT BO000375
(71) Applicant: Tecnoingranaggi Riduttori S.r.l., 40017 S. Giovanni in Persiceto (Bologna) (IT)
(72) Inventor: Bergonzoni, Giuliano, 40012 Caderara Di Reno (Bologna) (IT)
(74) Representative: Dall'Olio, Giancarlo

(57) **Abstract**

Planet gear reducer including: a tubular casing (2) having a teeth (22) on its inner surface in a central position (K) thereof; reduction stages (5a,5b) arranged in cascade with the relative planet gears (50a,50b) engaging with said teeth (22); an input shaft (Ai), associated to the first reduction stage (5a) and supported rotatably by a first bushing (4) situated inside said casing (2); a closing ring (3), aimed at closing the input side of said or casing (2) by fastening means (30); an output shaft (Ao), associated to the second reduction stage (5b) and supported rotatably by a second bushing (6) situated inside the casing (2). The gear reducer includes at least two threaded holes (F), which are accessible from outside. Each of the holes (F) pass through the second bushing (6) as well as through the casing (2). Screw means pass through a relative support structure (S) and engage with the holes (F), so as to mutually fasten the second bushing (6) to the casing (2) and the gear reducer to the support structure (S).

## Description

The present invention relates to planet gear reducers, with reference to systems for:
- fastening the gear to a related structure;
- positioning and stabilizing, in suitable seats inside the gear, bearings and/or other means for supporting the gear input and output shafts.

Known planet gear reducers include mechanisms which are situated between a driving shaft (or input shaft) and a driven shaft (or output shaft) and which are aimed at reducing the speed of the output shaft with respect to the input shaft according to a selected ratio (reduction ratio).

Thus, the gears include: an input shaft; one or more reduction stages; a casing (or shell), having teeth on its inner surface, the teeth being complementary to the teeth of related planet gear reducers situated inside the casing and associated to each reduction stage; bearings and relative oil seals for supporting the input shaft and output shaft following the reduction stages.

The heads of each reducer are closed with closing rings, one of which closes the input while the other closes the output.

Both closing rings are fastened to the gear casing by suitable fixing means, e.g. screws passing through corresponding holes made in both the casing and the closing rings.

The closing ring associated to the gear reducer output features, made therein, other holes, e.g. perpendicular to the already existing fixing holes and corresponding to mirror-symmetrical holes, which are made in the relative support structure and through which fastening means pass to allow to fasten the gear reducer to the structure.

The closing rings feature, made thereinside, ring-like seats, which contain the bearings and/or other elements for completing the gear reducer.

One of the disadvantages of the known gear reducers results from the fact that the closing rings with holes, which allow them to be fastened to the gear reducer casing, and the holes for fastening the output closing ring to a support structure, are very expensive and consequently, the gear reducer costs are high too.

Moreover, each closing ring features a longitudinal ring-like seat for housing bearings and oil seals, which increase considerably the gear reducer costs.

The object of the present invention is to propose a planet gear reducer, whose shape allows it to be fastened to a support structure, and which is simple and cheap.

Another object of the present invention is to propose means for positioning and stabilizing the bush which carries the bearings associated to the gear output shaft.

The above mentioned objects are obtained in accordance by the features reported in the independent claim. Further features of the invention are reported in the dependent claims.

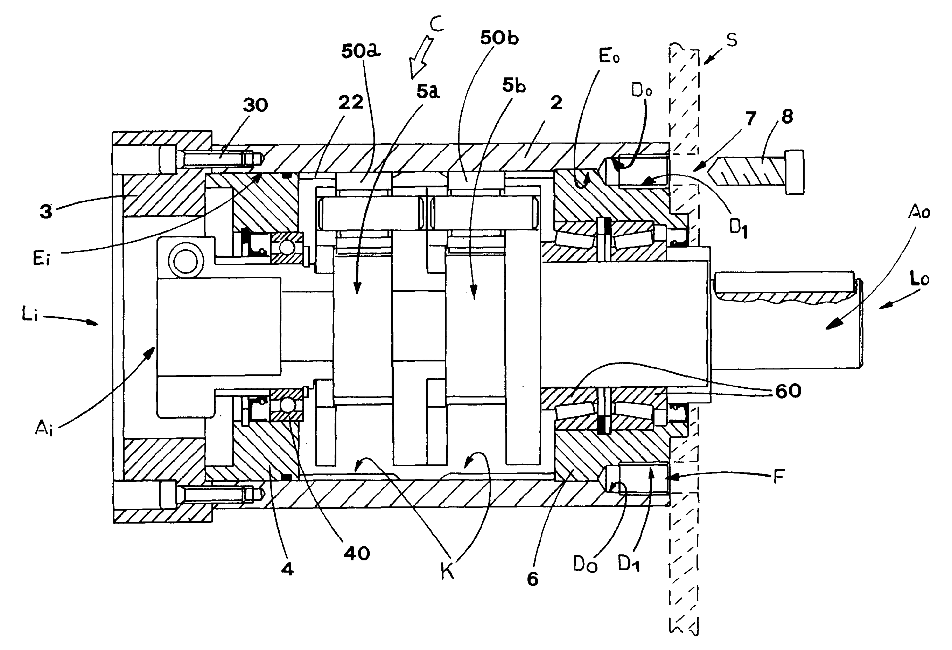

The characteristic features of the present invention will be pointed out in the following description, with a particular reference to the enclosed drawing which is a lateral, partial section view of the proposed planet gear reducer, with the structure, to which the gear reducer is to be fastened, indicated with broken line.

With a particular reference to the enclosed drawing, the reference letter C indicates the proposed planet gear reducer.

The planet gear reducer includes a tubular casing 2 having a teeth 22 on its inner surface, situated in a central position K thereof.

Reduction stages 5a, 5b are arranged in cascade inside the casing 2 with the relative planet gears 50a, 50b engaging with the teeth 22.

An input shaft Ai, associated to the first reduction stage 5a, is supported by a first bushing 4 with the interposition of a first rolling-contact bearing 40.

The first bushing 4 is fitted inside the whole inner part of the inlet end Ei of the casing 2 and goes in abutment against the teeth 22.

A closing ring 3, fastened to the casing 2 by known fastening means 30, is aimed at closing the input side Li and at maintaining the position of the first bushing 4.

An output shaft Ao, associated to the second reduction stage 5b, is supported by a second bushing 6 with the interposition of second rolling-contact bearings 60.

The second bushing 6 is fitted, as will be explained later, into the output end Eo of the casing 2 to close the output side Lo of the planet gear reducer, with the inner head of the second bushing 6 going in abutment against the teeth 22.

The outer surface of the second bushing 6 features, on the output side Lo, first partial seats D1 and the inner surface of the casing 2 features second partial seats D0 on the output side.

When the second bushing 6 is coupled, with a slight interference, with the casing 2, the first partial seats D1 and the second partial seats D0 define together holes F, whose axes are parallel to the longitudinal axis of the casing 2.

Afterwards, each of the holes F is threaded according to known techniques.

The gear reducer C is fastened to a support structure S.

What above is actuated by joining the gear reducer C to the support structure S, so that the holes F are aligned with the relative holes 7, made in the support structure S, and subsequently, screws 8 are fitted into the holes 7 until the latter are coupled with the holes F.

The screws have two tasks:
- to fasten the second bushing 6 to the casing 2;
- to fasten the gear reducer C to the support structure S.

Thus, it is possible to avoid the output side closing ring, described in prior art, for fastening the gear reducer to the support structure, and consequently to reduce the gear reducer production costs.

From the input side, the first bushing 4 is kept in abutment (thus stabilized) against the toothing 22 by the closing ring 3.

## Claims

1. Planet gear reducer including:
a tubular casing (2) having teeth (22) made on its inner surface in a central position (K) thereof;
reduction stages (5a,5b) arranged in cascade with the relative planet gears (50a,50b) engaging with said teeth (22);
an input shaft (Ai), associated to the first reduction stage (5a) and supported rotatably by a first bushing (4) fitted inside said casing (2);
a closing ring (3) for closing the input side of said casing (2) by fastening means (30);
an output shaft (Ao), associated to the second reduction stage (5b) and supported rotatably by a second bushing (6) fitted inside said casing (2),
the gear reducer being **characterized in that** it includes:
at least two threaded holes (F) accessible from outside, each of said holes (F) passing through the second bushing (6) as well as through the casing (2);
screw means passing through a relative support structure (S) and engaging with said holes (F), so as to mutually fasten the second bushing (6) to the casing (2) and said gear reducer to the support structure (S).

2. Gear reducer, according to claim 1, **characterized in that** said first bushing (4) receives a rolling-contact bearing (40), fitted onto said input shaft (Ai), said first bushing being coupled with the input end (Ei) of said casing (2) and kept in abutment against said teeth (22) by said closing ring (3).

3. Gear reducer, according to claim 1, **characterized in that** said second bushing (6) receives relative rolling-contact bearings (60), fitted onto said output shaft, with said second bushing (6) being fastened to the output end (Eo) of the casing (2) by coupling with the casing (2), to close the output side (Lo) of the planet gear reducer, with the inner head of said bushing (6) going in abutment against the teeth (22).
